# DEMANDE DE BREVET EUROPEEN

(11) **EP 0 612 948 A1**
(43) Date de publication de la demande: **31.08.1994**
(21) Numéro de dépôt: 94400406.8
(22) Date de dépôt: 25.02.1994
(51) Int. Cl.: F16L 33/02

(54) **Collier de serrage à ressort**

(30) Priorité: 26.02.1993 FR 9302259
(71) Demandeur: Etablissements CAILLAU, F-92130 Issy-les-Moulineaux (FR)
(72) Inventeur: Calmettes, Lionel, F-41200 Romorantin Lanthenay (FR); Detable, Pascal, F-41130 Villedieu (FR)
(74) Mandataire: Descourtieux, Philippe

(57) **Abrégé**

Collier de serrage à ressort constitué par une bande de métal ***(1)*** enroulée sur elle-même, les portions terminales ***(1******a******-1******b******)*** de ladite bande ayant chacune une largeur sensiblement égale à la moitié de la largeur de la bande, étant disposées l'une à côté de l'autre et étant pourvues de pattes ***(2-3)***, dirigées radialement vers l'extérieur du collier, formant butées d'appui pour un outil du genre pince, cependant que la bande présente une section transversale en **V** aplati, de telle sorte que la région centrale de la surface intérieure du collier a un diamètre inférieur à celui de ses régions latérales. L'angle formé par les deux branches du **V** est compris entre 120° et 165° et le rapport entre l'épaisseur ***e*** de la bande et la longueur ***L*** de chaque branche est lui-même compris en 0,2 et 0,5.

## Description

On connaît déjà notamment par le brevet FR-A-811968 et par le brevet EP-A-443 681 des colliers de serrage d'un tuyau souple sur un tube rigide, généralement dénommés *"colliers à ressort".* De tels colliers sont essentiellement constitués par une bande métallique enroulée sur elle-même, les portions terminales de la bande ayant une largeur sensiblement égale à la moitié de celle de la bande, et étant disposées l'une à côté de l'autre. Chaque portion terminale est d'autre part pourvue d'une patte, dirigée radialement vers l'extérieur du collier et constituant une butée pour les mâchoires d'un outil du genre pince.

Le métal utilisé est choisi ou convenablement traité pour présenter non seulement une bonne résistance à la flexion mais surtout une rigidité appropriée à son usage. En effet, la mise en place d'un tel collier est obtenue en rapprochant les butées précitées l'une de l'autre au moyen d'un outil de serrage du genre pince. Le diamètre du collier se trouve ainsi augmenté, ce qui permet de l'engager facilement, par coulissement axial, sur le tuyau ou l'objet à serrer. La cessation de l'effort de rapprochement des butées libère l'énergie accumulée dans le collier qui vient alors lui-même serrer le tuyau en tentant de reprendre son diamètre initial.

La force de serrage du collier dépend par conséquent de l'augmentation de son diamètre par rapport à celui qu'il possède à l'état libre ; en outre par sa structure même, le collier peut suivre, par déformation élastique, les fluctuations du diamètre de l'objet à serrer, et maintenir en principe un serrage suffisant. Cette propriété est importante notamment pour le serrage des tuyaux souples, en caoutchouc ou matériaux analogues, emmanchés sur des tubes rigides pour assurer le raccordement étanche de canalisations véhiculant des fluides à température variable. On sait que de tels tuyaux sont susceptibles de fluer, de sorte qu'il est souhaitable que le collier compense par lui-même la diminution du diamètre du tuyau.

Le brevet européen précité propose également d'améliorer la raideur du collier et sa résistance à la flexion sans pour autant augmenter l'épaisseur de la bande de métal. A cet effet, il prévoit sur la bande des nervures de renforcement faisant saillie sur la surface extérieure du collier et s'étendant sur la quasi-totalité de la périphérie de celui-ci. Toutefois cette solution, qui permet théoriquement d'aboutir au résultat recherché, présente notamment l'inconvénient d'une fabrication relativement onéreuse et quelquefois difficile, en particulier si l'épaisseur de la bande est quelque peu importante.

On conçoit aisément d'autre part que la pression du serrage exercée par un collier sur la périphérie de l'objet à serrer, en particulier d'un tuyau souple susceptible de fluer, dépend de la surface d'appui du collier sur cet objet. A cet égard, on a déjà proposé, notamment par le brevet DE-A-3.026.582 de donner à la section de la bande constituant un collier à ressort, la forme d'un **V**, notamment pour augmenter sa force de serrage par rapport à celle d'un collier de section circulaire de même surface.

Mais les colliers selon ce brevet allemand présentent l'inconvénient de conduire à un dépassement de la limite d'élasticité du métal dans certaines zones de la section du collier lors de la mise en place de celui-ci sur l'objet à serrer. Il en résulte qu'en cas de diminution du diamètre de l'objet à serrer, par exemple de fluage d'un tuyau, la force de serrage du collier et surtout la pression de serrage sur la surface de l'objet à serrer risquent d'être insuffisantes pour maintenir l'étanchéité d'un raccordement.

Dans ses recherches en vue d'améliorer l'efficacité des colliers à ressort, notamment de ceux décrits par le brevet allemand précité, tout en recherchant une fabrication aussi simple et peu onéreuse que possible, la demanderesse a constaté que l'on peut déterminer l'angle d'ouverture de la forme en **V** de la section du collier pour éviter les risques d'un dépassement de la limite d'élasticité de certaines zones du collier au moment de sa mise en place. On peut ainsi conserver les avantages généraux, rappelés plus haut, des colliers à ressort, même si le diamètre de l'objet à serrer, et plus particulièrement des tuyaux souples de raccordement étanche, varie dans des proportions relativement importantes au cours de l'utilisation.

La présente invention concerne donc un collier de serrage à ressort constitué par une bande de métal enroulée sur elle-même sur plus de 360°, dont la section présente une forme en **V** de telle sorte que la région centrale de la surface intérieure du collier a un diamètre inférieur à celui de ses régions latérales.

Selon l'invention, l'angle formé par les deux branches du **V** est compris entre 120 et 165, le rapport entre l'épaisseur de la bande et la longueur de chaque branche étant lui-même compris en 0,2 et 0,5.

Les choix prévus par l'invention pour l'angle des branches du **V** et le rapport entre l'épaisseur et la longueur de chaque branche tiennent compte bien évidemment des valeurs généralement admises pour la résistance et le rapport entre l'épaisseur de la bande et le diamètre du collier, dans l'état actuel de la technique, c'est-à-dire des diamètres inférieurs à 70 mm.

A cet égard, on rappelle que le métal d'un collier à ressort possède généralement une résistance à la traction au moins égale à 550 N/mm², cependant que le rapport entre l'épaisseur de la bande et le diamètre du collier est en général compris entre 0,04 et 0,05.

Les limites des plages de valeurs définies par les choix proposés par l'invention ne paraissent pas devoir être modifiées dans un avenir proche, de sorte qu'il n'apparaît pas utile de donner ici le détail des calculs et des observations qui ont conduit la demanderesse à les proposer.

Grâce à ces choix particulièrement simples à mettre en oeuvre, on obtient de façon sûre et régulière, sur toute la périphérie du collier, une augmentation de sa rigidité et, par conséquent, pour toute épaisseur de la bande, une augmentation de sa force de serrage, tout en conservant une pression de serrage relativement limitée, par exemple de l'ordre de 10 ou 20 N/cm². Ces avantages sont très appréciables, notamment s'il s'agit de serrer un tuyau souple sur un tube rigide.

L'invention sera mieux comprise et ses caractéristiques ainsi que ses avantages apparaîtront au cours de la description qui va suivre, en référence aux dessins annexés dans lesquels:
· La figure 1 est une vue en perspective d'un collier de serrage à ressort selon l'invention.
· La figure 2 est une vue partielle en coupe transversale dans la partie courante du collier, monté sur un tuyau en caoutchouc.

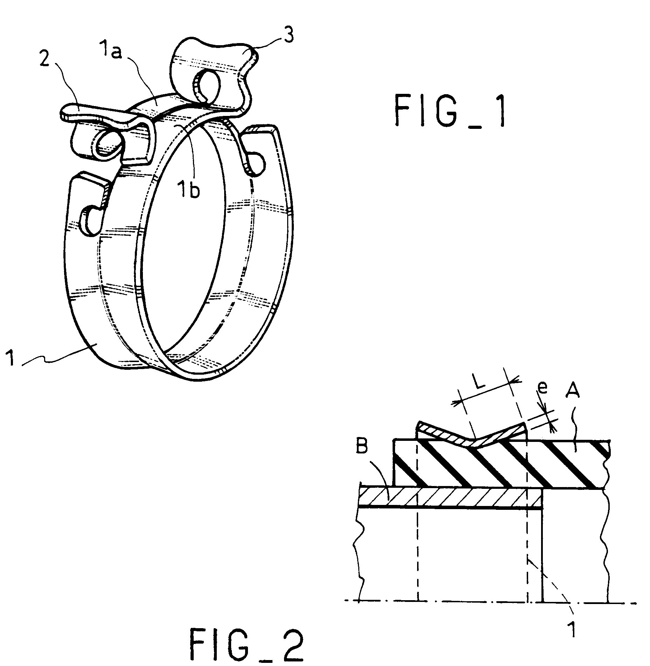

Si l'on se reporte aux figures 1 et 2, on voit un collier à ressort constitué par une bande métallique ***1*** enroulée sur elle-même. Ses portions terminales ***1******a*** et ***1******b*** présentent chacune une largeur sensiblement égale à la moitié de celle de la bande et sont pourvues de pattes ***2*** et ***3***, faisant saillie radialement vers l'extérieur du collier. Ainsi qu'on le sait, les pattes ***2*** et ***3*** constituent des butées d'appui pour un outil, du genre pince, permettant, par rapprochement desdites pattes, d'augmenter le diamètre du collier pour l'enfiler axialement sur un objet allongé, notamment sur un tuyau souple emmanché sur un tube rigide. Le relâchement de l'effort sur les pattes ***2*** et ***3*** provoque le serrage du collier grâce à l'énergie accumulée dans le ressort constitué par la bande ***1*** elle-même.

Comme on le voit sur la figure 2, la section transversale de la bande ***1***, au lieu d'être plane, présente aussi bien dans la partie courante de la bande ***1*** que dans ses portions terminales ***1******a*** et ***1******b*** une forme en **V** aplati. L'angle formé par les branches du **V** sera en général largement ouvert et compris entre 120° et 165°, de préférence voisin de 140°. Il est souhaitable en effet que, lors du serrage, le collier pénètre incomplètement dans le tuyau ***A*** sans provoquer les boursouflures que l'on remarque fréquemment au voisinage des bords longitudinaux des colliers usuels constitués par une bande plate. Ainsi on ne risque aucun décollement dans la zone de contact entre le tuyau ***A*** et le tube ***B*** ni les défauts d'étanchéité qui en sont la conséquence. Bien plus, au cours du serrage, le collier selon l'invention pénètre progressivement dans la paroi ***A*** du tuyau souple et l'on peut constater que la pression qu'il exerce sur le tuyau reste limitée et que l'on évite ainsi les risques de fluage du tuyau souple.

D'autre part, pour que le collier assure une force de serrage suffisante dans toutes les circonstances de son utilisation, c'est-à-dire que l'énergie accumulée lors de sa mise en place atteigne le niveau nécessaire sans risquer de provoquer localement des dépassements de la limites d'élasticité du métal, il convient de respecter une rapport convenable entre la longueur ***L*** d'une branche du ***V*** et l'épaisseur ***e*** de la bande. Ainsi qu'on l'a indiqué plus haut ce rapport doit être compris entre 0,2 et 0,5.

A cet égard, on a pu déterminer que le moment de flexion des colliers selon l'invention reste, sur toute leur périphérie, inférieur aux limites au-delà desquelles apparaissent les inconvénients constatés lors de l'utilisation des colliers selon le brevet allemand précité.

## Revendications

1. Collier de serrage à ressort constitué par une bande de métal (***1***) enroulée sur elle-même, les portions terminales (***1******a******-1******b***) de ladite bande ayant chacune une largeur sensiblement égale à la moitié de la largeur de la bande, étant disposées l'une à côté de l'autre et étant pourvues de pattes (***2-3***), dirigées radialement vers l'extérieur du collier, formant butées d'appui pour un outil du genre pince, cependant que la bande présente une section transversale en **V** aplati, de telle sorte que la région centrale de la surface intérieure du collier a un diamètre inférieur à celui de ses régions latérales, caractérisé en ce que l'angle formé par les deux branches du **V** est compris entre 120° et 165° et que le rapport entre l'épaisseur ***e*** de la bande et la longueur ***L*** de chaque branche est lui-même compris en 0,2 et 0,5.
